# EUROPÄISCHE PATENTSCHRIFT

(11) **EP 1 764 596 B1**
(45) Veröffentlichungstag und Bekanntmachung des Hinweises auf die Patenterteilung: **14.09.2011**
(21) Anmeldenummer: 06019232.5
(22) Anmeldetag: 14.09.2006
(51) Int. Cl.: G01L 5/24

(54) **Anordnung zur Erfassung von Messgrössen in Schraubverbindungen**
Arrangement for collecting measured values in threaded connections
Arrangement de collection de grandeurs de mesure dans des raccords filetés

(30) Priorität: 20.09.2005 DE 102005044917
(43) Veröffentlichungstag der Anmeldung: 21.03.2007
(73) Patentinhaber: AS Tech Industrie- und Spannhydraulik GmbH, 52511 Geilenkirchen (DE)
(72) Erfinder: Schlösser, Arndt, 41836 Hückelhoven (DE)
(74) Vertreter: Kohlmann, Kai

(56) Entgegenhaltungen:
- EP-A1- 1 570 956
- WO-A1-2005/021983
- DE-A1- 4 002 259
- DE-A1- 10 138 261
- DE-A1- 19 849 293
- US-A- 4 846 001
- US-A- 5 291 789
- US-A1- 2004 065 154
- US-B1- 6 354 152

## Beschreibung

Die Erfindung betrifft eine Anordnung zur Erfassung von Messgrößen in Schraubverbindungen, wobei ein Messsensor zur Erfassung der Messgrößen an der Schraubverbindung angeordnet ist und der Messsensor als Funksensor mit automatischer Messwerterfassung ausgestaltet ist, ein entfernt von der Schraubverbindung angeordneter Speicher für die Messwerte über eine Funkstrecke mit dem Funksensor verbunden ist und der Funksensor ein Wegmesssystem aufweist.

Bei bestimmten Maschinen und Anlagen, insbesondere in druckbelasteten Anlagenteilen, wie Rohren und Kesseln, ist es für Hersteller, Zertifizierer, Versicherer sowie Betreiber derartiger Anlagen von großer Bedeutung, die Vorspannkraft der Schraubverbindungen zu dokumentieren und/oder zu überwachen. Dies gilt insbesondere dann, wenn eine Reihe von Schraubverbindungen mit hydraulischen Schraubenspannvorrichtungen hergestellt werden müssen.

Eine weitere Anwendung von Anordnungen zur Erfassung von Messgrößen in Schraubverbindungen besteht in der Überwachung von Schraubverbindungen in schlecht zugänglichen Anlagen. Zu erwähnen sind beispielsweise Windkraftanlagen und Pipelines, die häufig lange Zeit weitgehend unbeobachtet betrieben werden. Kommt es zu einem Schaden an einer Schraubverbindung wird dieser häufig zu spät bemerkt und die Instandsetzung ist aufwendig und teuer.

Bisher werden die Vorspannkräfte in derartigen Schraubverbindungen mit mechanischen Messuhren gemessen und manuell dokumentiert.

Darüber hinaus ist aus der DE 101 38 261 A1 eine Sensorvorrichtung zur Überwachung der Kraft einer Schraubverbindung zwischen zwei Werkstücken bekannt, mit der ein unbeabsichtigtes Lösen der Schraubverbindung überwacht werden kann. In den Kraftfluss der Schraubverbindung zwischen Schraubenkopf und Werkstück ist das drucksensitive Sensorelement eingefügt, dessen Druck-Sensivität als ein abfragbares elektrisches Signal zu erfassen ist. Das Sensorelement besteht beispielsweise aus zwei gegeneinander isolierten Tellerfedern, die als Platten eines Kondensators wirken. An die Tellerfedern ist eine Spule angeschlossen, die zusammen mit der Kapazität des Kondensators einen Schwingkreis bildet. Durch die Kraft der Schraubverbindung werden die Tellerfedern flachgepresst. Dieses Sensorelement eignet sich zur Abfrage eines kapazitiven Signals. Die Abfrage erfolgt über eine Kabelverbindung oder auf elektromagnetische Weise mit Hilfe eines Abfragegeräts, das den Schwingkreis mittels elektromagnetischer Induktion zur Schwingung anregt und das Antwortsignal des Schwingkreises zur Auswertung empfängt.

Nachteilig ist die Anordnung des Sensorelementes im Kraftfluss der Schraubverbindung, da die auf das Sensorelement wirkenden Kräfte das Messergebnis verfälschen. Des Weiteren ist die Überwachung einer Vielzahl von Schraubverbindungen mit dieser Lösung schwierig. Die Schwingkreise müssen voneinander verschiedene Eigenfrequenzen aufweisen, wobei die Eigenfrequenzen so weit voneinander verschieden bemessen werden müssen, dass die durch Lösen einer Verbindung gewollt bedingte Änderung der Frequenz eines Schwingkreises nicht in den Änderungsbereich eines Schwingkreises mit benachbarter Eigenfrequenz fällt.

Eine drahtlose elektronsiche Schraubenüberwachung mit einer von außen auf das Schraubgwinde aufgeschraubten, überwachten Schraubenmutter im Kraftfluss ist auch aus der DE 40 02 259 A1 bekannt.

Die WO 2005/021983 A1 offenbart eine Anordnung zur Überwachung einer Bolzen-/Schraubverbindung. Die Anordnung umfasst einen Detektor, der das Lösen der Bolzen-/Schraubverbindung, beispielsweise eine Rotation oder Verlagerung der Schraube feststellt, Übertragungsmittel und eine Energieversorgung. Die Übertragungsmittel können kabellos ausgeführt sein und die Daten zu einem Empfänger übertragen, der ein Signal generiert, wenn sich die Bolzen-/Schraubverbindung gelöst hat.

Die US 6,354,152 B1 offenbart eine Anordnung zur Erfassung von dynamischen Belastungen in Bauteilen, insbesondere eines Flugzeuges, die mit einer Ultraschallmessanordnung überwacht werden. Die Ultraschallpulse werden in einem Computer in Messwerte umgewandelt. Die Verbindung zwischen den Sensoren und den Prozessoren zur Verarbeitung der Sensorsignale kann über ein Kabel oder kabellos erfolgen.

Die US 2004/065154 A1 offenbart einen Ultraschallmesssensor, der an einem Befestigungsmittel angeordnet ist und Ultraschallmessungen in dem Befestigungsmittel durchführt. Dem Ultraschallsensor ist ein Speichermedium zugeordnet, in dem Kennzeichnungen enthalten sind, die mit den zugehörigen Daten des Befestigungsmittels korrespondieren. Die gespeicherten Daten können über eine Fernabfrage ausgelesen werden, beispielsweise über das Internet.

Die DE 198 49 293 A1 offenbart eine Anordnung zum Erfassen von Messgrößen an einer Vielzahl von Messstellen eines Messobjektes, wobei eine Messvorrichtung zum Messen einer Messgröße an einer der Messstellen vorgesehen ist und wobei die Messvorrichtung eine Sendeeinrichtung aufweist zum drahtlosen Senden des Messergebnisses und einer der Messstelle zugeordneten Kennung an einer Auswerteeinrichtung. Die Auswerteeinrichtung wertet die empfangenen Messergebnisse und deren Kennung hinsichtlich des Vorliegens eines bestimmten Zustandes des Messobjektes aus. Beim Vorliegen des bestimmten Zustandes erfolgt eine Signalisierung an eine Fördereinrichtung zum Zuführen eines neuen Messobjektes. Mit der Anordnung soll eine Qualitätssicherung erzielt werden.

Die EP 1 570 956 A1 offenbart ein Schraubwerkzeug zur Erfassung einer Axialkraft in einer Schraubverbindung, das einen Steckkörper aufweist, der drehbar an einem Werkzeugkörper gehalten wird. Der Steckkörper weist eine Aufnahme für eine Mutter auf, die an einer Schraube befestigbar ist. In dem Werkzeugkörper ist ein Ultraschallsensor angeordnet, der entlang der Achse des Steckkörpers beweglich ist, um mit der Stirnseite der Schraube in der Aufnahme für die Mutter in Kontakt gebracht zu werden. Der Ultraschallsensor sendet Ultraschallwellen an die Schraube aus und empfängt von der Schraube reflektierte Ultraschallwellen, wodurch eine Axialkraft, die auf die Schraube wirkt, durch die ausgesendeten und empfangenen Ultraschallwellen erfasst wird.

Ausgehend von diesem Stand der Technik liegt der Erfindung die Aufgabe zugrunde, eine Anordnung zur Erfassung von Messgrößen in Schraubverbindungen zu schaffen, die eine Vorspannkraft in die Schraubverbindungen einbringt, eine Dokumentation und/oder Überwachung der Messwerte der Vorspannkraft mit geringen Datenmengen erleichtert, insbesondere wenn eine Vielzahl von Schraubverbindungen protokolliert und/oder überwacht werden soll und die sich einfach an Schraubverbindungen realisieren lässt. Des Weiteren soll ein vorteilhaftes Verfahren zum Betrieb einer derartigen Anordnung angegeben werden.

Diese Aufgabe wird bei einer Anordnung der eingangs erwähnten Art dadurch gelöst, dass ein freies Ende des Schaftes der Schraubverbindung mit einem in einem Zylinder geführten Kolben einer hydraulischen Spannvorrichtung verbunden ist, wobei sich der Zylinder der hydraulischen Spannvorrichtung an den zu verschraubenden Bauteilen abstützt, der Funksensor an der hydraulischen Spannvorrichtung angeordnet ist und der Funksensor einen Funksignalprozessor zur automatischen Messwerterfassung sowie zur Übertragung der Messwerte über die Funkstrecke aufweist.

Die Übertragung des Bewegungswegs des Kolbens der hydraulischen Spannvorrichtung auf das Wegmesssystem des Funkssensors muss nicht notwendigerweise mechanisch mittels eines Stabs erfolgen, der sich dabei vorzugsweise in Achs- und Bewegungsrichtung des Kolbens der hydraulischen Spannvorrichtung erstreckt. Wird der Schaft der Schraubverbindung von dem Kolben der hydraulischen Spannvorrichtung gestreckt, bewegt sich zugleich der Stab, der wiederum mit dem Wegmesssystem gekoppelt ist. Der Bewegungsweg kann von dem in den Funksensor integriertem Wegmesssystem auch berührungslos, beispielsweise über elektromagnetische Strahlung erfasst werden. Da die Bewegung des Kolbens proportional der Schraubendehnung ist, kann auf diese Weise die Vorspannkraft erfasst werden.

Die Funkübertragung der automatisch von dem Funksensor erfassten Messwerte vermeidet das Ablesen analog ermittelter Kraftmesswerte und deren Eintragung beispielsweise in ein Protokoll. Der Signalprozessor in dem Funksensor rechnet die Bewegung des Wegmesssystems in Messwerte um. Dadurch, dass der Messsensor als Funksensor mit automatischer Messwerterfassung ausgestaltet ist, können bereits an der Schraubverbindung die Messwerte erzeugt und damit lediglich geringe Datenmengen an den entfernt davon angeordneten Speicher übertragen werden. Dies ist insbesondere dann von besonderer Bedeutung, wenn eine Vielzahl von Schraubverbindungen protokolliert und/oder überwacht werden soll. Die Anordnung des Funksensors an der Schraubverbindung wird besonders einfach dadurch realisiert, dass der Funksensor ein Wegmesssystem aufweist.

Zur Betätigung des Wegmesssystems weist der Schaft der Schraubverbindung in Achsrichtung einen Durchgang auf, der an einer Seite ein Innengewinde aufweist, das mit einem ein Außengewinde tragenden Stab verbunden ist, der in dem Durchgang im Übrigen gleitend geführt ist und sich an der gegenüberliegenden Seite des Durchgangs über dessen Austrittsöffnung hinaus bis zu dem Wegmesssystem erstreckt. Infolge der in die Schraubverbindung eingeleiteten Vorspannkräfte kommt es zu einer Dehnung des Schaftes der Schraubverbindung. Infolgedessen tritt eine Relativbewegung zwischen dem in dem Durchgang gleitend geführten Stab und dem Schaft auf. Diese Relativbewegung wird von dem Wegmesssystem erfasst und in dem Funksensor von einem Signalprozessor in Messwerte umgerechnet. Die Anzahl der Messwerte pro Zeiteinheit wird ebenfalls von der automatischen Messwerterfassung festgelegt, beispielsweise ein Messwert je Sekunde.

In einer Ausgestaltung der Erfindung kann das Wegmesssystem des Funksensors über einen Stab mit einem Kolben einer hydraulischen Spannvorrichtung verbunden sein. Der Stab erstreckt sich dabei vorzugsweise in Achs- und Bewegungsrichtung des Kolbens der hydraulischen Spannvorrichtung. Wird nun der Schaft der Schraubverbindung von dem Kolben der hydraulischen Spannvorrichtung gestreckt, bewegt sich zugleich der Stab, der wiederum mit dem Wegmesssystem gekoppelt ist. Da die Bewegung des Kolbens proportional der Schraubendehnung ist, kann auf diese Weise die Vorspannkraft erfasst werden. Die Übertragung des Bewegungswegs des Kolbens auf das Wegmesssystem des Funkssensors muss nicht notwendigerweise mechanisch mittels des Stabs erfolgen. Der Bewegungsweg kann von dem in den Funksensor integriertem Wegmesssystem auch berührungslos, beispielsweise über elektromagnetische Strahlung erfasst werden.

Im bevorzugter Ausführungsform ist der Funksensor integraler Bestandteil der hydraulischen Spannvorrichtung. Insbesondere dann, wenn bestehende hydraulische Spannvorrichtungen nachträglich mit einem Funksensor bestückt werden sollen oder auf Grund unterschiedlicher Einsatzorte, die beispielsweise unterschiedliche Sendefrequenzen erfordern, verschiedene Funksensoren an ein und derselben hydraulische Spannvorrichtung zum Einsatz gelangen sollen, ist es in einer Ausgestaltung der Erfindung vorgesehen, dass der Funksensor lösbar an einer für den Funksensor vorgesehenen Halterung der hydraulischen Spannvorrichtung angeordnet ist.

Die Übertragung der Messwerte über die Funkstrecke erfolgt vorzugsweise über ein Frequenzband, für das keine Lizenz erforderlich ist, beispielsweise das 915 MHZ ISN Frequenzband. Die Stromversorgung des Funksensors erfolgt insbesondere über eine in den Sensor integrierte Batterie. Der Funksensor einschließlich des Wegmesssystems, der automatischen Messwerterfassung sowie der Energieversorgung ist vorzugsweise in einem Gehäuse angeordnet, das mit dem Schaft der Schraubverbindung lösbar verbunden ist. Die lösbare Verbindung wird insbesondere über ein auf dem freien Ende des Schaftes aufschraubbares Gehäuse realisiert.

Der entfernt von der Schraubverbindung angeordnete Speicher für die Messwerte ist über einen Funkempfänger mit dem die Messwerte aussendenden Funksensor verbunden. Der Speicher ist insbesondere als ein Wechselmedium, beispielsweise ein USB-Stick, ausgebildet. Mittels des USB-Sticks lassen sich am Ende einer Messperiode die darin gesammelten Messwerte in eine Rechnereinheit übertragen und dort protokollieren und/oder weiter auswerten. Die Übertragung der Messwerte an dem Speicher selbst erfolgt vorzugsweise in Echtzeit, d. h. ohne zeitliche Verzögerung.

Die Weiterverarbeitung der in dem Speicher abgelegten Messwerte in einer Rechnereinheit kann jedoch auch unmittelbar erfolgen. Werden die Messwerte zeitversetzt an die Rechnereinheit zur Weiterverarbeitung übertragen, können sie zunächst in einem tragbaren Handgerät, das den USB-Stick und den zugehörigen Funkempfänger umfasst, zwischengespeichert werden.

Zu Überwachungszwecken, beispielsweise von Windkraftanlagen, empfiehlt es sich, die in dem Speicher abgelegten Messwerte direkt in der Rechnereinheit weiterzuverarbeiten. Dies ermöglicht es, ständig den Zustand der Schraubverbindung zu erfassen und diese einem Soll-/Ist-Wertvergleich zu unterziehen. Weichen die Ist-Werte von vorgegebenen SollWerten ab, können beispielsweise optische und/oder akustische Warnsignale erzeugt werden, die einen Fehler in den Verschraubungen anzeigen. Hierdurch wird die Betriebssicherheit derartiger Anlagen verbessert.

Nachfolgend wird die Erfindung anhand der Figuren näher erläutert:
- **Figur 1**: zeigt eine Anordnung zur Erfassung der Vorspannkraft in einer Schraubverbindung, die mittels einer hydraulischen Spannvorrichtung vorgespannt wird.
- **Figur 2**: zeigt eine Anordnung zur Erfassung der Vorspannkraft einer herkömmlich hergestellten Schraubverbindung
- **Figur 3**: zeigt ein zweites Ausführungsbeispiel einer Anordnung zur Erfassung der Vorspannkraft in einer Schraubverbindung, die mittels einer hydraulischen Spannvorrichtung vorgespannt wird, wobei der Funksensor in die hydraulische Spannvorrichtung integriert ist
- **Figur 4**: zeigt ein drittes Ausführungsbeispiel einer Anordnung zur Erfassung der Vorspannkraft in einer Schraubverbindung, die mittels einer hydraulischen Spannvorrichtung vorgespannt wird, wobei der Funksensor lösbar an der hydraulischen Spannvorrichtung befestigt ist, und
- **Figur 5**: zeigt eine Anordnung zur Erfassung der Vorspannkraft einer Schraubverbindung, die mittels einer hydraulischen Spannvorrichtung vorgespannt wird, wobei die hydraulische Spannvorrichtung zugleich als Mutter der Schraubverbindung wirkt und der Funksensor lösbar an der hydraulischen Spannvorrichtung befestigt ist.

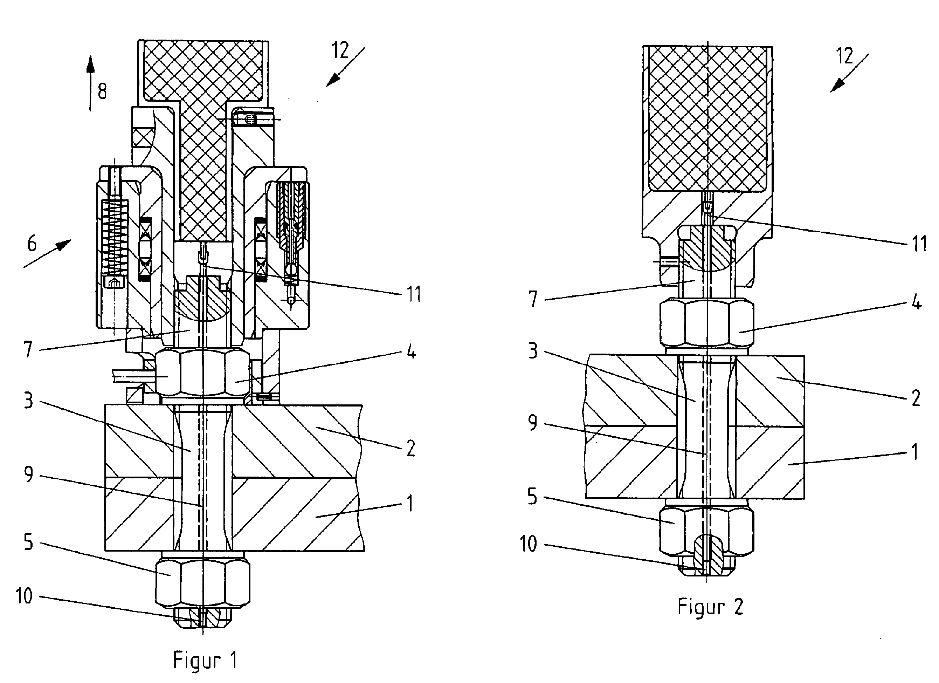

Figur 1 zeigt zwei Flansche 1, 2, die über einen Schaft 3 einer Gewindestange sowie zwei Muttern 4, 5 miteinander verbunden sind. Die Schraubverbindung 3,4,5 wird mit Hilfe einer an sich bekannten hydraulischen Spannvorrichtung 6 hergestellt, die das Außengewinde am freien Ende 7 des Schaftes 3 erfasst und mit Hilfe von Hydraulikflüssigkeit in Richtung des Pfeils 8 bewegt. Infolge dieser Streckung wird eine definierte Kraft zwischen den beiden Flanschen 1 und 2 durch die hydraulische Spannvorrichtung 6, die auf dem oberen Flanschen 2 aufliegt, ausgeübt. Die Mutter 4 wird sodann von der hydraulischen Spannvorrichtung beigedreht, so dass sie auf der Oberfläche des Flansches 2 zur Anlage gelangt.

Zur Messung der dabei auftretenden Vorspannkräfte weist der Schaft 3 der Gewindestange in Achsrichtung einen Durchgang 9 auf, der am unteren Ende ein Innengewinde 10 besitzt. In dieses Innengewinde 10 wird ein ein Außengewinde tragender Stab 11 eingeschraubt, der in dem Durchgang oberhalb des Innengewindes 10 gleitend geführt ist und sich an der dem Innengewinde 10 gegenüberliegenden Seite des Durchgangs über dessen Austrittsöffnung hinaus bis zu dem nicht näher dargestellten Wegmesssystem innerhalb des insgesamt mit 12 bezeichneten Funksensors erstreckt. Der Funksensor 12 ist in dem gezeigten Ausführungsbeispiel ebenfalls auf dem Schaft 3 der Gewindestange aufgesetzt. Der Funksensor 12 umfasst ein Wegmesssystem sowie einen Funksignalprozessor zur automatischen Messwerterfassung sowie zur Übertragung der Messwerte über eine Funkstrecke an einen in den Figuren nicht dargestellten Speicher, der einen Funkempfänger für die Messwerte aufweist.

Wird nun mit der hydraulischen Spannvorrichtung 6 der Schaft 3 in Richtung des Pfeils 8 gestreckt, kommt es zu einer Relativbewegung zwischen dem gleitend geführten Anteil des Stabs 11 und dem Schaft 3 der Gewindestange. Infolgedessen ändert sich die Position des Wegmesssystems, das von dem Stab 11 betätigt wird. Das Wegmesssystem ist beispielsweise ein über den Stab 11 betätigter veränderlicher Widerstand. Der Funksignalprozessor greift in regelmäßigen Abständen, die während der Dehnung auftretenden unterschiedlichen Messwerte ab und überträgt diese über die Funkstrecke an den Speicher. Auf diese Weise kann der Aufbau der Vorspannkraft bei Einsatz einer hydraulischen Spannvorrichtung 6 an der Schraubverbindung 3, 4, 5, erfasst, gespeichert und anschließend oder nahezu zeitgleich mittels eines Personalcomputers dokumentiert und protokolliert werden. Zu diesem Zweck wird auf dem die Daten aus dem Speicher verarbeitenden Personalcomputer vorzugsweise eine Software installiert, die die erfassten Messwerte in einem definierten Verspannungsprotokoll für die einzelnen Schrauben des Flansches einträgt.

Die Anordnung nach Figur 2 unterscheidet sich von der Anordnung nach Figur 1 im Wesentlichen darin, dass die Schraubverbindung 3,4,5 nicht mit Hilfe einer hydraulischen Spannvorrichtung 6 hergestellt wird. Der insgesamt ebenfalls mit 12 bezeichnete Funksensor ist auf dem freien Ende 7 des Schaftes 3 der Gewindestange aufgeschraubt. Der Stab 11 leitet seine Relativbewegung zu der Gewindestange 3 unmittelbar in das in dem Funksensor integrierte Wegmessgerät ein, das im Übrigen übereinstimmend mit dem Ausführungsbeispiel nach Figur 1 mit einem Funksignalprozessor die Kraftmesswerte in regelmäßigen zeitlichen Abständen erfasst und an einen Speicher zur weiteren Auswertung überträgt. Bei dieser Ausführungsform der Erfindung werden die Messwerte vorzugsweise fortlaufend von dem Personalcomputer aus dem Speicher ausgelesen und ausgewertet. Etwaige Betriebsstörungen an der Verschraubung können dadurch sofort erkannt und ggf. behoben werden. Die Kosten für die permanente Fernüberwachung von Windkraftanlagen oder Pipelines lassen sich durch die erfindungsgemäße Anordnung zur Erfassung der Vorspannkraft in Schrauben erheblich reduzieren und gleichzeitig die Verfügbarkeit der Anlagen/ Einrichtungen durch störungsbedingte Ausfälle erhöhen, da diese schneller erkannt und dadurch behoben werden können. Durch Integration des Funksignalprozessors in den Funksensor 12 ist eine Auswertung der Signale des Wegmesssystems bereits im Funksensor 12 möglich. Hierdurch lässt sich das an den Speicher zu übertragende Datenvolumen reduzieren. Dies ist insbesondere dann von Bedeutung, wenn eine größere Zahl von Anlagen / Einrichtungen mit einer Vielzahl von Schraubverbindungen permanent überwacht werden soll.

Ein weiterer zentraler Vorteil der erfindungsgemäßen Anordnung besteht darin, dass nunmehr auch eine Messung der Vorspannkraft von solchen Schraubverbindungen möglich ist, die an rotierenden Bauteilen angeordnet sind. Schließlich lassen sich Fehler an Schraubverbindungen optisch und akustisch signalisieren.

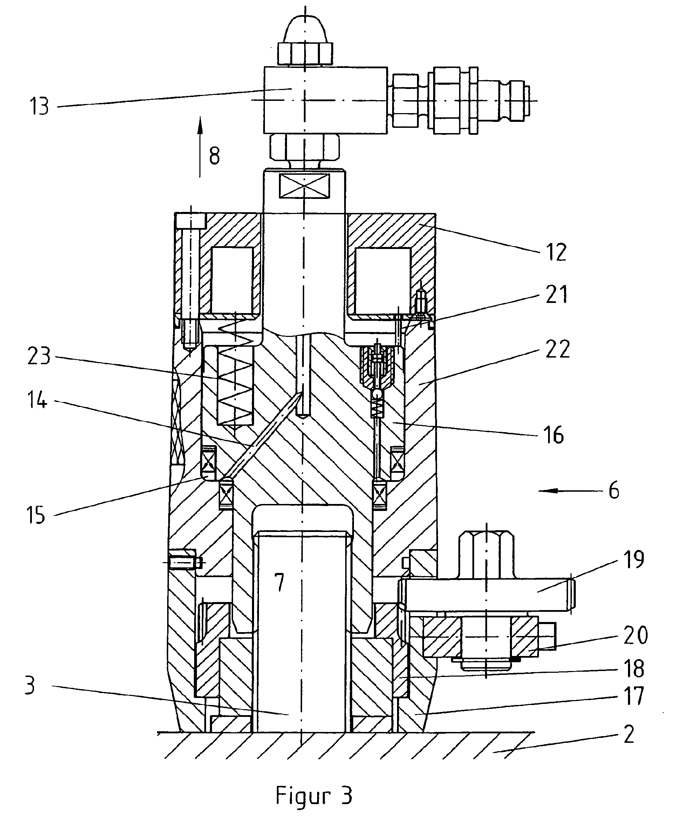

Die Anordnung nach Figur 3 unterscheidet sich von der Anordnung nach Figur 1 im Wesentlichen darin, dass der Funksensor 12 mit integriertem Wegmesssystem in die an sich bekannte hydraulische Spannvorrichtung 6 integriert ist. Die in Figur 3 lediglich teilweise dargestellte Schraubverbindung wird mit der hydraulischen Spannvorrichtung 6 hergestellt, die das Außengewinde am freien Ende 7 des Schaftes 3 erfasst und mit Hilfe von Hydraulikflüssigkeit in Richtung des Pfeiles 8 bewegt. Die Hydraulikflüssigkeit wird über einen Winkeldrehanschluss 13 sowie Kanäle 14 in einen Zylinderraum 15 der Spannvorrichtung 6 gefördert. Die in den Zylinderraum 15 gelangende Hydraulikflüssigkeit bewirkt eine Bewegung des Kolbens 16 in Richtung des Pfeiles 8. Infolgedessen wird der Schaft 3 der Schraubverbindung gestreckt und eine definierte Kraft zwischen dem in Figur 3 dargestellten Flansch 2 und dem nicht dargestellten Flansch 1 ausgeübt, wobei die Spannvorrichtung 6 mit ihrer Stützhülse 17 auf dem oberen Flansch aufliegt. Die Mutter 4 wird wie bei dem Ausführungsbeispiel nach Figur 1 nach der Streckung des Schaftes 3 automatisch beigedreht. Zu diesem Zweck weist die Mutter 4 eine Außenverzahnung auf, die mit einer innenverzahnten Nuss 18 kämmt. Die innenverzahnte Nuss 18 wird wiederum von einem Ritzel 19 angetrieben, dass in einer Ritzelaufnahme 20 gelagert ist und mit einem in der Figur 3 nicht dargestellten Antrieb verbunden ist.

Zur Messung der bei der Verschraubung auftretenden Vorspannkräfte dient ein an dem Kolben 16 der hydraulischen Spannvorrichtung 6 anliegender Stab 21, der parallel zur Achsrichtung der hydraulischen Spannvorrichtung in einer Führung des Funksensors 12 geführt ist. Dieser Stab 21 ist mit dem nicht näher dargestellten Wegmesssystem innerhalb des insgesamt mit 12 bezeichneten Funksensors verbunden. Der Funksensor 12 ist in dem dargestellten Ausführungsbeispiel fest mit der oberen Stirnseite der hydraulischen Spannvorrichtung verbunden. Der Funksensor 12 enthält darüber hinaus den Funksignalprozessor zur automatischen Messwerterfassung sowie zur Übertragung der Messwerte über eine Funkstrecke an einen in der Figur 3 nicht dargestellten Speicher, der einen Funkempfänger für die Messwerte aufweist. An dem stirnseitig angeordneten Funksensor 12 stützt sich eine Feder 23 ab, die dem Kolben 16 in dem Zylinder 22 nach Beendigung der Druckbeaufschlagung mit Hydraulikflüssigkeit in seine Ausgangsstellung entgegen der Bewegungsrichtung 8 bewegt. Die Übertragung des Bewegungswegs des Kolbens auf das Wegmesssystem des Funkssensors 12 muss nicht notwendigerweise mechanisch, mittels des Stabs 21 erfolgen. Der Bewegungsweg kann von dem in den Funksensor integriertem Wegmesssystem auch berührungslos, beispielsweise über elektromagnetische Strahlung erfasst werden.

Wird nun mit der hydraulischen Spannvorrichtung 6 der Schaft 3 in Richtung des Pfeiles 8 gestreckt, bewegt sich gleichzeitig der Stab 21 um denselben Betrag in Richtung des Pfeiles 8. Infolgedessen ändert sich die Position des Wegmesssystems, das von dem Stab 21 betätigt wird. Auf diese Weise kann der Aufbau der Vorspannkraft, der zu der Bewegung des Kolbens 16 der hydraulischen Spannvorrichtung proportional ist, erfasst, gespeichert und anschließend oder nahezu zeitgleich mittels eines Personalcomputers dokumentiert und protokolliert werden.

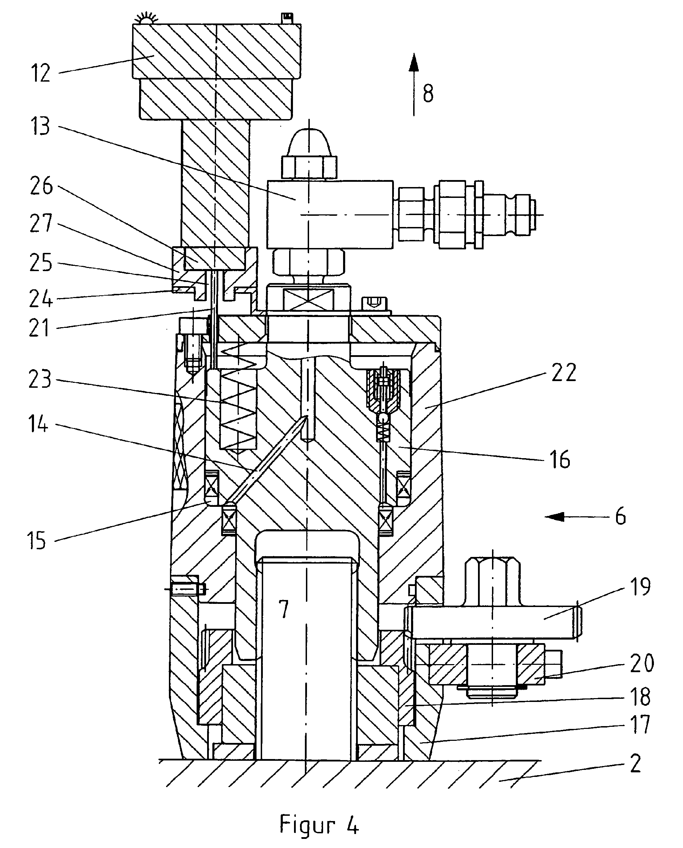

Figur 4 zeigt eine der Figur 3 vergleichbare Anordnung, die sich im wesentlichen dadurch unterscheidet, dass der Funksensor 12 mit integriertem Wegmesssystem nicht in die hydraulische Spannvorrichtung 6 integriert ist, sondern als austauschbares Element lösbar mit einer Halterung 24 verbunden ist. Die Halterung 24 ist als abgewinkeltes, an der Stirnseite der hydraulischen Spannvorrichtung 6 angeordnetes Blech ausgebildet, dass einen Durchgang 25 für den Stab 21 ausweist, der vergleichbar mit der Ausführungsform nach Figur 3 an dem Kolben 16 anliegt und sich parallel zur Achsrichtung der hydraulischen Spannvorrichtung 6 erstreckt. Der Stab 21 betätigt, wie bei dem Ausführungsbeispiel nach Figur 3, das nicht näher dargestellte Wegmesssystem innerhalb des insgesamt mit 12 bezeichneten austauschbaren Funksensors. Der Funksensor 12 weist stirnseitig einen Einsatz 26 auf, der in eine Aufnahme 27 der Halterung 24 einsetzbar ist. Zur Vermeidung von Wiederholungen hinsichtlich des Aufbaus der hydraulischen Spannvorrichtung 6 sowie der Funktionsweise der Anordnung wird auf die Ausführungen nach Figur 3 verwiesen.

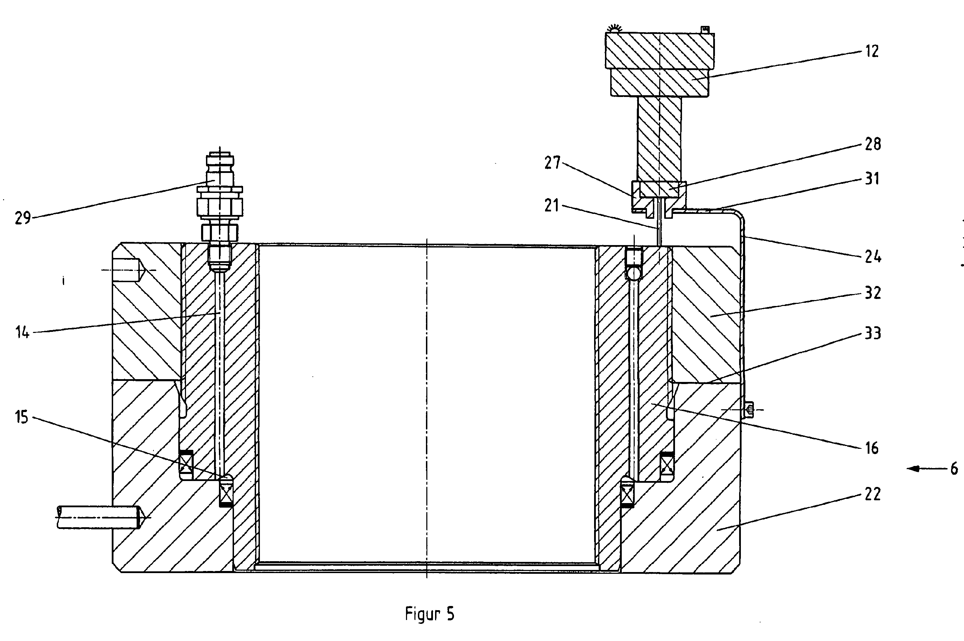

Figur 5 zeigt eine Anordnung zur Erfassung der Vorspannkraft einer Schraubverbindung, die mittels einer hydraulischen Spannvorrichtung 6 vorgespannt wird, .wobei die hydraulische Spannvorrichtung 6 zugleich als Mutter der im Übrigen nicht dargestellten Schraubverbindung wirkt und der Funksensor lösbar an der hydraulischen Spannvorrichtung 6 befestigt ist. Derartige hydraulische Spannvorrichtungen werden auch als hydraulische Mutter bezeichnet.

Die Funktionsweise und der grundsätzliche Aufbau der hydraulischen Spannvorrichtung 6 nach Figur 5 entspricht weitgehend denen nach Figuren 3 und 4. Insoweit wird auf die dortigen Ausführungen Bezug genommen. Übereinstimmend weist die hydraulischen Spannvorrichtung 6 einen austauschbaren Funksensor 12 mit integriertem Wegmesssystem auf, das über einen Stab 21 betätigt wird. Der Stab 21 liegt wie bei dem Ausführungsbeispiel nach Figuren 3 und 4 wiederum an dem Kolben 16 der hydraulischen Spannvorrichtung an, der in dem Zylinder 22 geführt ist. Der Kolben 16 ist jedoch abweichend zu dem Kolben nach Figur 4 durchgehend hohlzylindrisch ausgeführt. Der Innenmantel ist meinem Innengewinde versehen, das auf den Schaft der Schraubverbindung aufgeschraubt wird. Die Kanäle 14 für die Hydraulikflüssigkeit verlaufen durch die Wandung des Kolbens 16. Der Anschluss 29 für die Hydraulikflüssigkeit befindet sich daher in Verlängerung der Kolbenwandung an deren oberer Stirnseite. Wird nun der Zylinderraum 15 mit Druck beaufschlagt, wandert der obere Rand des Kolbens 16 geringfügig aus dem nach oben offenen Zylinder heraus und spannt die Schraubverbindung vor. Die Fixierung der Schraubverbindung erfolgt entweder durch Aufrechterhalten des hydraulischen Fluiddrucks und /oder durch Beidrehen einer Kontermutter 32, bis diese nach der Streckung des Schaftes der Schraubverbindung wieder an der ringförmigen Oberfläche 33 des Zylinders 22 zur Anlage gelangt.

Auf Grund des bauartbedingten Unterschiedes der hydraulischen Spannvorrichtung 6 nach Figur 5 gegenüber der Spannvorrichtung nach Figur 4, ist die Halterung für den austauschbaren Funksensor 12 an der Außenmantelfläche des Zylinders 22 befestigt. In Bewegungsrichtung 8 des Kolbens 16 überragt der Halter 24 den Zylinder 22, um ein hinreichenden Abstand zwischen einem horizontalen Aufnahmeabschnitt 31 des Halters 24 zu dem oberen Rand des Kolbens 16 und der Kontermutter 32 sicher zu stellen.

Die Funkübertragung erlaubt Funkstrecken von bis zu 300 Metern Entfernung. Die Funksensoren 12 können mit einer Batterie bis zu 2 Jahren betrieben werden.

### Bezugszeichenliste

| Nr. | Bezeichnung | Nr. | Bezeichnung |
|---|---|---|---|
| 1. | Flansch | 29. | Anschluss |
| 2. | Flansch | 30. | - |
| 3. | Schaft | 31. | Aufnahmeabschnitt |
| 4. | Mutter | 32. | Kontermutter |
| 5. | Mutter | 33. | ringförmige Oberfläche |
| 6. | Spannvorrichtung | 34 | |
| 7. | freies Ende des Schaftes | 35 | |
| 8. | Bewegungsrichtung | 36 | |
| 9. | Durchgang | 37 | |
| 10. | Innengewinde | 38 | |
| 11. | Stab | 39 | |
| 12. | Funksensor | 40 | |
| 13. | Winkeldrehanschluss | 41 | |
| 14. | Kanäle | 42 | |
| 15. | Zylinderraum | 43 | |
| 16. | Kolben | 44 | |
| 17. | Stützhülse | 45 | |
| 18. | verzahnte Nuss | 46 | |
| 19. | Ritzel | 47 | |
| 20. | Ritzelaufnahme | 48 | |
| 21. | Stab | 49 | |
| 22. | Zylinder | 50 | |
| 23. | Feder | 51 | |
| 24. | Halter | 52 | |
| 25. | Durchgang | 53 | |
| 26. | Einsatz | 54 | |
| 27. | Aufnahme | 55 | |
| 28. | --- | 56 | |

## Patentansprüche

1. Anordnung zur Erfassung von Messgrößen in Schraubverbindungen, wobei ein Messsensor zur Erfassung der Messgrößen an der Schraubverbindung(3,4,5) angeordnet ist, wobei der Messsensor als Funksensor (12) mit automatischer Messwerterfassung ausgestaltet ist, ein entfernt von der Schraubverbindung angeordneter Speicher für die Messwerte über eine Funkstrecke mit dem Funksensor verbunden ist und der Funksensor (12) ein Wegmesssystem aufweist, **dadurch gekennzeichnet, dass**
- ein freies Ende (7) des Schaftes (3) der Schraubverbindung (3,4,5) mit einem in einem Zylinder (22) geführten Kolben (16) einer hydraulischen Spannvorrichtung (6) verbunden ist, wobei sich der Zylinder (22) der hydraulischen Spannvorrichtung an den zu verschraubenden Bauteilen abstützt,
- der Funksensor an der hydraulischen Spannvorrichtung angeordnet ist und
- der Funksensor (12) einen Funksignalprozessor zur automatischen Messwerterfassung sowie zur Übertragung der Messwerte über die Funkstrecke aufweist.

2. Anordnung nach Anspruch 1, **dadurch gekennzeichnet, dass** der Schaft (3) der Schraubverbindung (3,4,5) in Achsrichtung einen Durchgang (9) aufweist, der an einer Seite ein Innengewinde (10) aufweist, dass mit einem ein Außengewinde tragenden Stab (11) verbunden ist, der in dem Durchgang (9) im Übrigen gleitend geführt ist und sich an der dem Innengewinde (10) gegenüberliegenden Seite des Durchgangs (9) über dessen Austrittsöffnung hinaus bis zu dem Wegmeßsystem erstreckt.

3. Anordnung nach Anspruch 1, **dadurch gekennzeichnet, dass** zwischen dem Kolben (16) und dem Wegmeßsystem des Funksensors Übertragungsmittel (11,21) angeordnet sind, mit denen die Bewegung des Kolbens auf das Wegmeßsystem übertragen werden.

4. Anordnung nach Anspruch 3, **dadurch gekennzeichnet, dass** das Übertragungsmittel ein sich zwischen dem Kolbenboden und dem Wegmeßsystem in Bewegungsrichtung (8) des Kolbens (16) erstreckender Stab (21) ist.

5. Anordnung nach einem der Ansprüche 1 - 4, **dadurch gekennzeichnet, dass** der Funksensor lösbar an einer für den Funksensor vorgesehenen Halterung der hydraulischen Spannvorrichtung angeordnet ist.

6. Anordnung nach einem der Ansprüche 1 - 4, **dadurch gekennzeichnet, dass** der Funksensor integraler Bestandteil der hydraulischen Spannvorrichtung ist.

7. Anordnung nach einem der Ansprüche 1 bis 6, **dadurch gekennzeichnet, dass** der Speicher über einen Funkempfänger mit dem Funksensor (12) verbunden ist.

8. Anordnung nach einem der Ansprüche 1 bis 7, **dadurch gekennzeichnet, dass** der Speicher ein Wechselmedium ist.

9. Anordnung nach einem der Ansprüche 1 bis 8, **dadurch gekennzeichnet, dass** der Speicher und der zugeordnete Funkempfänger Bestandteile eines tragbaren Handgerätes sind.

10. Anordnung nach einem der Ansprüche 1 bis 9, **dadurch gekennzeichnet, dass** der Speicher eine Schnittstelle zu einer Datenverarbeitungseinheit aufweist.

11. Anordnung nach Anspruch 2 oder einem oder mehreren der Ansprüche 5 - 10 in Verbindung mit Anspruch 2, **dadurch gekennzeichnet**, das der Funksensor in einem Gehäuse angeordnet ist, das mit dem Schaft (3) der Schraubverbindung (3,4,5) lösbar verbunden ist.

12. Verfahren zum Betrieb einer Anordnung nach einem der Ansprüche 1 bis 11, wobei die von der Vorspannkraft abhängige Dehnung der Schraubverbindung (3,4,5) unterschiedliche Messwerte des Wegmesssystems hervorruft, **dadurch gekennzeichnet, dass**
- die Messwerte des Wegmesssystems mittels eines Funksignalprozessors in Kraft-Messwerte umgerechnet und in Echtzeit an den Speicher übertragen werden und
- die Vorspannkraft in die Schraubverbindung (3,4,5) mit einer hydraulischen Spannvorrichtung (6) eingebracht wird und
- die Kraft-Messwerte in der Recheneinheit mit Hilfe einer Software automatisch protokolliert und/oder ausgewertet werden.

13. Verfahren nach Anspruch 12, **dadurch gekennzeichnet, dass** die in dem Speicher abgelegten Messwerte an eine Rechnereinheit übertagen und dort weiterverarbeitet werden.

14. Verfahren nach Anspruch 13, **dadurch gekennzeichnet, dass** die Messwerte zeitversetzt an die Rechnereinheit übertragen werden.

15. Verfahren nach einem der Ansprüche 12 bis 14, **dadurch gekennzeichnet, dass** abhängig von der Höhe der Kraft-Messwerte optische und/oder akustische Signale von der Rechnereinheit erzeugt werden.

## Claims

1. An arrangement for detecting measured variables in screw connections, wherein one measurement sensor for detecting measured variables is disposed on the screw connection (3, 4, 5), wherein the measurement sensor is configured as a radio sensor (12) with automatic detection of measured values, a memory for the measured values located at a distance from the screw connection is connected to the radio sensor (12) by means of a radio link and the radio sensor (12) comprises a distance measurement system, **characterised in that**
- a free end (7) of the shaft (3) of the screw connection (3, 4, 5) is connected to a piston (16) of a hydraulic clamping device (6) guided in a cylinder (22), wherein the cylinder (22) of the hydraulic clamping device is supported on the components to be screwed,
- the radio sensor is disposed on the hydraulic clamping device and
- the radio sensor (12) comprises a radio signal processor for the automatic detection of measured values and for the transmission of the measured values over the radio link.

2. The arrangement according to claim 1, **characterised in that** the shaft (3) of the screw connection (3, 4, 5) has a passage (9) in the axial direction, which has an internal thread (10) on one side, which is connected to a rod (11) carrying an external thread, which is also guided slidingly in the passage (9) and which extends on the side of the passage (9) opposite the internal thread (10) over the outlet opening thereof as far as the distance measurement system.

3. The arrangement according to claim 1, **characterised in that** transmission means (11, 21) are disposed between the piston (16) and the distance measurement system of the radio sensor, by which means the movement of the piston is transmitted to the distance measurement system.

4. The arrangement according to claim 3, **characterised in that** the transmission means is a rod (21) extending between the piston base and the distance measurement system in the direction of movement (8) of the piston (16).

5. The arrangement according to any one of claims 1-4, **characterised in that** the radio sensor is disposed detachably on a holder of the hydraulic clamping device provided for the radio sensor.

6. The arrangement according to any one of claims 1-4, **characterised in that** the radio sensor is an integral component of the hydraulic clamping device.

7. The arrangement according to any one of claims 1 to 6, **characterised in that** the memory is connected to the radio sensor (12) by means of a radio receiver.

8. The arrangement according to any one of claims 1 to 7, **characterised in that** the memory is a removable medium.

9. The arrangement according to any one of claims 1 to 8, **characterised in that** the memory and the associated radio receiver are components of a portable handheld device.

10. The arrangement according to any one of claims 1 to 9, **characterised in that** the memory has an interface to a data processing unit.

11. The arrangement according to claim 2 or one or more of claims 5-10 in conjunction with claim 2, **characterised in that** the radio sensor is disposed in a housing which is detachably connected to the shaft (3) of the screw connection (3, 4, 5).

12. A method for operating an arrangement according to any one of claims 1 to 11, wherein the elongation of the screw connection (3, 4, 5) depending on the pre-tensioning force produces different measured values of the distance measurement system **characterised in that**
- the measured values of the distance measurement system are converted into force measured values by means of a radio signal processor and transmitted in real time to the memory and
- the pre-tensioning force is introduced in the screw connection (3, 4, 5) by means of a hydraulic clamping device (6) and
- the force measured values are automatically recorded and/or evaluated in the processing unit with the aid of software.

13. The method according to claim 12, **characterised in that** the measured values stored in the memory are transmitted to a computer unit and further processed there.

14. The method according to claim 13, **characterised in that** the measured values are transmitted in a time-delayed manner to the computer unit.

15. The method according to any one of claims 12 to 14, **characterised in that** optical and/or acoustic signals are generated by the computer unit depending on the level of the force measured values.

## Revendications

1. Dispositif pour l'enregistrement de grandeurs de mesure dans des assemblages vissés, un capteur de mesure pour l'enregistrement des grandeurs de mesure étant disposé sur l'assemblage vissé (3, 4, 5), le capteur de mesure étant conçu sous forme de capteur radio (12) avec enregistrement automatique de valeur de mesure, une mémoire disposée à distance de l'assemblage vissé et destinée aux valeurs de mesure étant reliée par une liaison radio au capteur radio et le capteur radio (12) présentant un système de mesure de déplacement, **caractérisé en ce**
- **qu'**une extrémité (7) libre de la tige (3) de l'assemblage vissé (3, 4, 5) est reliée à un piston (16), guidé dans un cylindre (22), d'un dispositif de serrage (6) hydraulique, le cylindre (22) du dispositif de serrage hydraulique s'appuyant sur les composants à visser,
- le capteur radio est disposé sur le dispositif de serrage hydraulique et
- le capteur radio (12) présente un processeur de signaux radio pour l'enregistrement automatique de valeur de mesure et pour la transmission des valeurs de mesure via la liaison radio.

2. Dispositif selon la revendication 1, **caractérisé en ce que** la tige (3) de l'assemblage vissé (3, 4, 5) présente dans la direction de l'axe un passage (9), qui présente sur un côté un filetage intérieur (10), qui est relié à une barre (11) portant un filetage extérieur, laquelle est guidée par ailleurs de façon coulissante dans le passage (9) et s'étend sur le côté, opposé au filetage intérieur (10), du passage (9) au-delà de son ouverture de sortie jusqu'au système de mesure de déplacement.

3. Dispositif selon la revendication 1, **caractérisé en ce que** des moyens de transmission (11, 21), avec lesquels les mouvements du piston sont transmis au système de mesure de déplacement, sont disposés entre le piston (16) et le système de mesure de déplacement du capteur radio.

4. Dispositif selon la revendication 3, **caractérisé en ce que** le moyen de transmission est une barre (21) s'étendant entre le fond de piston et le système de mesure de déplacement dans le sens du mouvement (8) du piston (16).

5. Dispositif selon l'une quelconque des revendications 1 à 4, **caractérisé en ce que** le capteur radio est disposé de façon amovible sur un support, prévu pour le capteur radio, du dispositif de serrage hydraulique.

6. Dispositif selon l'une quelconque des revendications 1 à 4, **caractérisé en ce que** le capteur radio est un composant intégré du dispositif de serrage hydraulique.

7. Dispositif selon l'une quelconque des revendications 1 à 6, **caractérisé en ce que** la mémoire est reliée par un récepteur radio au capteur radio (12).

8. Dispositif selon l'une quelconque des revendications 1 à 7, **caractérisé en ce que** la mémoire est un support amovible.

9. Dispositif selon l'une quelconque des revendications 1 à 8, **caractérisé en ce que** la mémoire et le récepteur radio attribué sont des composants d'un appareil manuel portable.

10. Dispositif selon l'une quelconque des revendications 1 à 9, **caractérisé en ce que** la mémoire présente une interface avec une unité de traitement de données.

11. Dispositif selon la revendication 2 ou selon l'une quelconque ou plusieurs des revendications 5 à 10 en liaison avec la revendication 2, **caractérisé en ce que** le capteur radio est disposé dans un boîtier qui est relié de façon amovible à la tige (3) de l'assemblage vissé (3, 4, 5).

12. Procédé pour faire fonctionner un dispositif selon l'une quelconque des revendications 1 à 11, la dilatation, dépendante de la force de tension initiale, de l'assemblage vissé (3, 4, 5) provoquant différentes valeurs mesurées du système de mesure de déplacement, **caractérisé en ce que**
- les valeurs mesurées du système de mesure de déplacement sont converties au moyen d'un processeur de signaux radio en valeurs mesurées de force et sont transmises en temps réel à la mémoire et
- la force de tension initiale est introduite dans l'assemblage vissé (3, 4, 5) avec un dispositif de serrage (6) hydraulique et
- les valeurs mesurées de force sont consignées et/ou sont analysées automatiquement dans l'unité de calcul à l'aide d'un logiciel.

13. Procédé selon la revendication 12, **caractérisé en ce que** les valeurs mesurées déposées dans la mémoire sont transmises à une unité de calcul où elles sont retraitées.

14. Procédé selon la revendication 13, **caractérisé en** en ce que les valeurs mesurées sont transmises de façon décalée à l'unité de calcul.

15. Procédé selon l'une quelconque des revendications 12 à 14, **caractérisé en ce que** des signaux optiques et/ou acoustiques sont générés par l'unité de calcul en fonction du niveau de la hauteur des valeurs mesurées de la force.
